# FASCICULE DE BREVET EUROPEEN

(11) **EP 0 705 876 B1**
(45) Date de publication et mention de la délivrance du brevet: **03.09.2003**
(21) Numéro de dépôt: 95402181.2
(22) Date de dépôt: 28.09.1995
(51) Int. Cl.: C08K 9/08, C08K 3/36, C08L 27/06

(54) **Compositions renforçantes comprenant une silice précipitée pour polymères thermoplastiques ayant des propriétés d'anti-mottage et d'écoulement améliorées**
Verstärkende Zusammensetzungen für thermoplastische Polymere, die eine Fällungskielsäure enthalten und bessere klumpenverhindernde Eigenschaften und ein besseres Fliessverhalten aufweisen
Reinforcing compositions for thermoplastic polymers including a precipitated silica having improved properties of non-caking and flow

(30) Priorité: 05.10.1994 FR 9411898
(43) Date de publication de la demande: 10.04.1996
(73) Titulaire: ATOFINA CHEMICALS, INC., Philadelphia PA 19102-3222 (US)
(72) Inventeur: Berthelo, Chris, Scotch Plains, New Jersey 07076 (US); Kunesch, Paul, F-64230 Ousse (FR); Meunier, Gilles, F-64230 Mazerolles (FR)
(74) Mandataire: Treuil, Claude

(56) Documents cités:
- EP-A- 0 217 701
- US-A- 4 956 398

## Description

L'invention a pour objet une composition renforcante pour polymères thermoplastiques ayant des propriétés d'anti-mottage et d'écoulement améliorées, selon la revendication 1.

L'invention concerne notamment une composition renforçante pour polymères de chlorure de vinyle.

Certaines résines synthétiques, notamment les résines à base de polychlorure de vinyle ou de copolymère à teneur majoritaire en chlorure de vinyl sont largement utilisées dans l'industrie du bâtiment en raison notamment de leur faible prix et de leurs bonnes propriétés physiques et/ou chimiques.

Néanmoins elles présentent de faibles résistance au choc à température ambiante ou à basse température ou bien également après vieillissement.

On a proposé de pallier ces défauts en incorporant à ces résines thermoplastiques des produits appelés additif choc qui sont généralement des polymères présentant un certain caractère élastomérique.

La quantité pondérale d'élastomère dans ces additifs choc peut varier dans une large mesure. Elle s'échelonne généralement de 40 à 70 %. Cependant, si l'on désire augmenter cette teneur pondérale en élastomère dans l'additif choc, afin d'en augmenter son efficacité, on constate, lors de l'isolement dudit additif sous forme de poudre et, également, lors du stockage, un mottage important.

Ceci entraîne des difficultés de manipulation et est rédhibitoire pour un transport des additifs par voie pneumatique.

Dans le brevet US 3 985 703 on décrit un procédé qui permet d'obtenir des poudres de polymère acrylique coeur/écorce ayant des teneurs en partie élastomérique allant de 55 à 85 % qui possèdent des propriétés d'écoulement et d'anti-mottage améliorées.

Ce procédé consiste à ajouter notamment au moment du séchage desdites poudres par atomisation 0,01 à 1,5 % de particules inertes de silice micronisée de diamètre de particules égal à 0,012 micron.

On a maintenant trouvé une composition renforcante pour polymère thermoplastique selon la revendication 1 comprenant au moins un additif choc, ayant des propriétés d'anti-mottage et de coulabilité améliorées, caractérisée en ce qu'elle comprend en outre une silice précipitée.

Selon la présente invention on entend par silice précipitée une silice consistant en particules primaires de l'ordre de 10 à 60 nanomètres qui s'associent pour former des agglomérats qui possèdent des grandeurs moyennes allant de 3 à 100 µm.

De préférence, on utilise des silices précipitées ayant des agglomérats qui possèdent des grandeurs moyennes allant de 3 à 80 microns et de préférence de 5 à 60 microns.

La teneur en SiO₂, déterminée par rapport à la substance calcinée pendant 2 heures à 1000°C est supérieure à 98 %.

Selon la présente invention, on utilise des silices précipitées ayant une surface spécifique (BET) allant de 25 à 700 m²/g et, de préférence, allant de 50 à 500 m²/g.

Selon la présente invention on utilise aussi bien des silices précipitées hydrophobes qu'hydrophiles.

La préparation de telles silices précipitées est décrite dans la littérature et ne constitue pas l'objet de l'invention.

A titre d'illustration des additifs choc utilisables selon la présente invention, on peut citer notamment les copolymères greffés dérivés d'un diène conjugé tel que butadiène ou isoprène choisis parmi les résines thermoplastiques butadiène-styrène telles que les résines acrylonitrile-butadiène-styrène (résines ABS), les résines ester alkylméthacrylique-butadiène-styrène (résine MBS), les résines ester alkylacrylique et/ou méthacrylique-butadiène-styrène. Parmi les résines ester alkylméthacryliques, on peut citer en particulier les résines ester méthylméthacrylique-butadiène-styrène, les résines ester éthylméthacrylique-butadiène-styrène, les résines esterbutylméthacrylique-butadiène-styrène, les résines ester laurylméthacrylique-butadiène-styrène. S'agissant des résines ester alkylacrylique-butadiène-styrène, on peut citer celles dérivées des acrylates de méthyle, d'éthyle, de butyle ou d'éthyl-2 hexyle. On peut également citer les copolymères greffés comprenant un tronc consistant en copolymère statistique d'un diène conjugué et d'un acrylate d'alkyle en C₂-C₁₂ sur lequel sont greffées des chaînes d'un copolymère de méthacrylate d'alkyle en C₁-C₄ et d'acrylate d'alkyle en C₁-C₈, le copolymère tronc pouvant en outre renfermer des motifs dérivés d'un agent réticulant renfermant au moins deux groupement CH₂ = C〈, lesdits copolymères ayant été décrits par exemple dans les brevets français 2 551 446 et 2 551 447 dont le contenu est incorporé par référence.

On peut également utiliser des résines dérivées du butadiène, thermoplastiques lors de la mise en oeuvre et avant vulcanisation, telles que la gomme styrène-butadiène (SBR), la gomme nitrile-butadiène (NBR), la gomme acrylate-butadiène (ABR).

Parmi ces polymères dérivés du butadiène, on donne la préférence aux résines MBS et ABS.

On peut également utiliser des résines essentiellement acryliques, c'est-à-dire renfermant plus de 90 % en poids d'ester acrylique polymérisé.

Selon la présente invention, la teneur en élastomère dans l'additif choc polymérique est au moins égale à 60 % en poids et, de préférence comprise entre 70 % et 90 %.

La composition renforcante selon la présente invention comprend au moins 80 % en poids d'additif choc et, de préférence de 95 % à 99 % ; et au plus 20 % en poids de silice précipitée et de préférence 1 % à 5 %.

Le polymère thermoplastique dans lequel on peut incorporer la silice précipitée conforme à l'invention en vue d'en améliorer la résistance au choc peut notamment consister en polymère du type des polycondensats, notamment polyesters tel que polybutylène téréphtalate, polycarbonates, polyamides ou encore du type des polymères comme, par exemple, polyméthacrylates et notamment polyméthylméthacrylate. Le polymère thermoplastique peut également consister en un ou plusieurs polymères d'addition choisis dans le groupe formé par les homopolymères du chlorure de vinyle qui peuvent être éventuellement surchlorés et les copolymères qui résultent de la copolymérisation du chlorure de vinyle avec un ou plusieurs comonomères éthyléniquement insaturés et qui renferment au moins 80 % en poids de chlorure de vinyle polymérisé. A titre de comonomères pour la préparation de tels copolymères conviennent notamment les halogénures de vinylidène comme le chlorure ou le fluorure de vinylidène, les carboxylates de vinyle comme l'acétate de vinyle, le propionate de vinyle, le butyrate de vinyle, les acides acryliques et méthacrylique ainsi que les nitriles, amides et esters d'alkyle qui en dérivent, notamment acrylonitrile, acrylamide, méthacrylamide, méthacrylate de méthyle, acrylate de méthyle, acrylate de butyle, acrylate d'éthyle, acrylate d'éthyl-2 hexyle, les dérivés vinylaromatiques tels que styrène, vinylnaphtalène, les oléfines telles que bicyco(2.2.1)hept-2-ène, bicyclo(2.2.1)hepta-2,5-diène, éthylène, propène, butène-1.

Parmi ces polymères, l'invention concerne tout particulièrement les homo- et copolymères du chlorure de vinyle.

La composition renforcante de la présente invention est utilisée à raison de 1 à 15 parties pour 100 parties en poids de polymère thermoplastique et, de préférence, de 4 à 9 parties.

L'invention concerne également les compositions comprenant le polymère thermoplastique et la composition renforcante tels que définis ci-avant.

Elle concerne également de telles compositions renfermant en outre, et en fonction notamment des conditions de mise en oeuvre ou de transformation et/ou des applications auxquelles elles sont destinées, les additifs usuels tels que pigments et/ou charges, plastifiants, antioxydants, stabilisants lumière ou ultraviolets.

A titre d'illustration de ces additifs, on peut citer les β-dicétones, hydrotalcites, dihydropyridines, les sels d'acides carboxyliques des métaux tels que Li, Na, K, Mg, Ca, Sr, Ba, Pb, Zn, Cd, Zr, Al, Si, Sb, Bi ou de couples de ces métaux tels que le Ca/Zn, Ba/Ca, Ca/Cd, Ba/Zn ; des mercaptides et notamment des mercaptides d'étain ; des alkyl- ou arylphosphites ; des composés époxydés ; des polyols ; des lubrifiants internes ou externes tels que les cires esters, les esters d'acides gras, les cires de polyéthylène oxydé ou non, l'huile de ricin hydrogénée, le mono-oléate ou le stéarate de glycérol, les esters d'acide montanique ; les charges telles que le dioxyde de titane ou le carbonate de calcium.

A l'exception des plastifiants qui peuvent en général être utilisés à des taux pouvant atteindre 100 % du poids du polymère thermoplastique, les autres additifs précités peuvent être utilisés à des taux pouvant représenter 0,05 à 20 % du poids du polymère thermoplastique.

La composition renforcante selon la présente invention peut être préparée par simple mélange à sec des constituants de la composition dans un appareil qui assure une bonne dispersion de poudres de faible granulométrie. A cet effet on peut utiliser des mélangeurs type Cloup tournant à une vitesse d'au moins 5000 tr/mn et de préférence entre 7000 et 10000 tr/mn.

L'additif choc et la silice précipitée peuvent être incorporés en mélange (composition renforçante) ou tels quels dans le polymère thermoplastique avant, en même temps ou après les autres additifs mentionnés précédemment lorsqu'il en est fait usage.

La silice précipitée peut être également introduit au moment du séchage de l'additif choc qui peut être réalisé notamment par atomisation. Les exemples qui suives illustrent l'invention.

### Préparation des compositions renforçantes selon l'invention.

Les compositions ont été préparées avec les constituants ci-après :

### Additif choc

L'additif choc de type coeur/écorce (80/20) est préparé suivant la technique décrite dans le brevet U.S. No 4 278 576 qui utilise une technique de polymérisation en émulsion standard à savoir, le polymère acrylique coeur/écorce est préparé en utilisant 79,2 parties d'acrylate de butyl, 0,4 partie de butylène glycol diacrylate et 0,4 partie de diallyl maléate comme coeur élastomérique suivi d'une polymérisation de 20 parties de méthacrylate de méthyle.

La poudre est obtenue à partir de l'émulsion par séchage par atomisation.

La teneur en eau de l'additif est de 1 %.

### Silices Précipitées

- **S1.**: Silice précipitée commercialisée par la Société OMNIA sous la dénommination NEOSIL GP.
- **S2.**: Silice précipitée commercialisée par la Société DEGUSSA sous la dénommination FK 500 LS.
- **S3.**: Silice précipitée commercialisée par la Société DEGUSSA sous la dénommination FK 320 DS.
- **S4.**: Silice précipitée commercialisée par la Société DEGUSSA sous la dénommination SIPERNAT D 17.
- **S5.**: Silice précipitée commercialisée par la Société DEGUSSA sous la dénommination SIPERNAT D 10.

Nous avons reporté dans le tableau 1 ci-après les caractéristiques essentielles des silices précipitées utilisées.

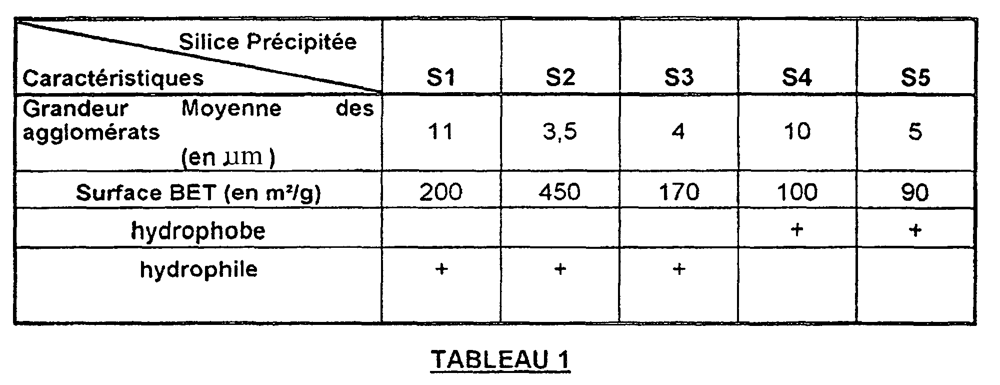

Les compositions renforçantes sont réalisées par mélange à sec des différents constituants, à température ambiante dans un mélangeur du type "Cloup" tournant à 7000 tr/mn.

**Sur le mélange obtenu on effectue :**
- le test de mottage
- le test de l'aptitude à l'écoulement désigné ci-après par coulabilité.

### - Test de mottage

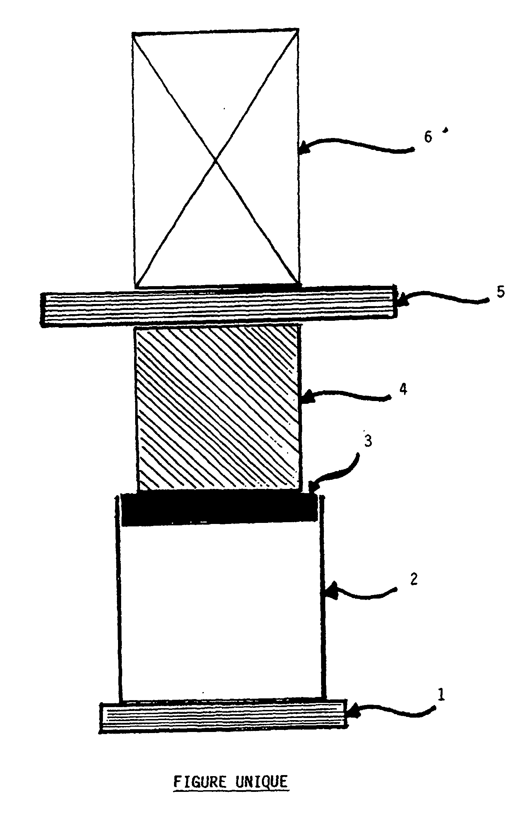

Il est effectué avec un dispositif tel que représenté sur la figure unique.

On dépose sur une plaque de PVC (1) de 60 X 60 mm et d'épaisseur 7 mm un cylindre creux (2) de hauteur égale à 50 mm et de diamètre intérieur égal à 55 mm.

On introduit 20 g de poudre dans le cylindre (2) on aplanit la surface et on applique un disque (3) de diamètre égal à 55 mm et d'épaisseur 10 mm. Sur ce disque on applique un cylindre plein (4) en PVC de diamètre 50 mm et de hauteur égale à 40 mm puis une plaque (5) de 85 X 85 mm et d'épaisseur égale à 6 mm.

L'ensemble est introduit dans une étuve à 45°C et on dépose sur la plaque (5) un poids de 5 kg (6).

On maintient 2 heures à 45°C.

Après 2 heures, on retire le poids de 5 kg, la plaque (5) et le cylindre plein (4).

On conserve à nouveau 30 minutes dans l'étuve à 45°C puis on laisse refroidir l'échantillon de poudre compactée à température ambiante pendant 30 minutes.

La poudre sous forme d'une pastille compactée est introduite dans un tamis de 12 mesh (ouverture de maille = 1,40 mm) d'une tamisette type Prolabo que l'on met en vibration (indice 5,5).

On relève le poids restant toutes les 5 secondes et le temps au bout duquel 60 % du produit est passé.

**Les résultats sont exprimés en secondes :**
- plus le temps est élevé pour que 60 % du produit passe, plus le mottage est important.
- **Le test de l'aptitude à** l'écoulement ou coulabilité est effectué selon la norme internationale ISO 6186-1980 (F).

Les résultats sont exprimés en secondes. Plus le temps est élevé plus l'aptitude à l'écoulement est mauvaise.

Les résultats des tests de mottage et d'aptitude à l'écoulement effectués sur des compositions renforçantes à base d'additif choc A1 et de silice précipitée sont reportés dans le tableau 2.

Dans ce tableau les proportions des constituants dans la composition renforçante sont exprimées en pourcentage en poids.

**TABLEAU 2**

| **EXEMPLES** | **ADDITIFS CHOC (%)** | **SILICE PRECIPITEE (%)** | | | | | **MOTTAGE (Secondes)** | C**OULABILITE (Secondes)** |
|---|---|---|---|---|---|---|---|---|
| | | **S1** | **S2** | **S3** | **S4** | **S5** | | |
| 1 (témoin) | 100 | | | | | | 80 | Ne coule pas |
| 2 | 99 | 1 | | | | | 15 | 11 C |
| 3 | 98 | 2 | | | | | 5 | 14,5 C |
| 4 | 99 | | 1 | | | | 8 | 12,5 C |
| 5 | 99 | | | 1 | | | 5 | 10,5 C |
| 6 | 99 | | | | 1 | | 9 | 10 C |
| 7 | 99 | | | | | 1 | 13 | 10 C |
| c = coule | | | | | | | | |

### Evaluation de la résistance au choc des composions selon l'invention

On prépare à 25°C une composition contenant (parties en poids) :
- 100 parties d'un homopolymère du chlorure de vinyle de KW = 67,
- 2,5 parties de phosphite de plomb,
- 1,5 parties de stéarate de calcium,
- 6 parties de carbonate de calcium,
- 4 parties de TiO₂,
- 1 partie d'un "processing aid" (Metablen P550 commercialisé par la société Metablen B.V.),
- 0,2 partie acide 12 stéarique,
- 0,3 partie de Loxiol G60 (lubrifiant interne),
- 4 parties de cires de polyéthylène (lubrifiant externe) et 6 parties de la composition renforçante de l'exemple 1 non conforme à l'invention [→ exemple 8, tableau 3] ou 9 parties de la composition renforçante de l'exemple 2 conforme à l'invention [→ exemple 9, tableau 3]

A partir des compositions de PVC précédemment obtenues on réalise des éprouvettes pour effectuer les essais de détermination des caractéristiques de résistances au choc Charpy entaillé suivant la norme BS : 2782.

Pour préparer les éprouvettes pour les essais au Choc CHARPY, les compositions de résine de PVC résultant des mélanges des ingrédients précités sont calandrées à 175°C pendant 6 minutes sur une calandreuse du type SCHWANBENTHAN, puis moulées à 190°C sur une presse DERRAGON, pendant 5 minutes sous une pression de 200 bars, sous la forme de plaques, le refroidissement desdites plaques ayant lieu sous presse.

Les éprouvettes sont découpées au moyen d'une scie circulaire puis d'une entailleuse pour les essais de Choc CHARPY.

L'épaisseur des éprouvettes, dont la forme est celle prescrite par la norme précitée est de 2,5 mm.

Les résultats sont reportés dans le tableau 3.

| **EXEMPLES** | **Energie de casse (en KJ/m**^{**2**}**)** | **% DE CASSE** |
|---|---|---|
| 8 (témoin) | 16,6 | 0 |
| 9 | 15,5 | 0 |

On peut constater que l'addition de silice précipitée (exemple 9) ne modifie quasiment pas la résistance au choc de la composition de PVC.

## Revendications

1. Composition renforçante pour polymère thermoplastique comprenant :
• au moins 80% en poids d'au moins un additif choc polymérique dont la teneur en élastomère est supérieure ou égale à 60% en poids, **caractérisée en ce qu'**elle comprend :
• au plus 20% en poids de silice précipitée - consistant en particules primaires de l'ordre de 10 à 60 nm qui s'associent pour former des agglomérats de grandeurs moyennes allant de 3 à 100 µm,
- dont la teneur en SiO₂, déterminée par rapport à la substance calcinée pendant 2 heures à 1000°C, est supérieure à 98%,
- ayant une surface spécifique BET allant de 25 à 700 m²/g, de préférence allant de 50 à 500 m²/g.

2. Composition selon la revendication 1, **caractérisée en ce qu'**elle comprend de 95 à 99% en poids d'au moins un additif choc et de 5 à 1% de silice précipitée.

3. Composition selon la revendication 1 ou 2, **caractérisée en ce que** les agglomérats de silice précipitée possèdent des grandeurs moyennes allant de 3 à 80 µm, et de préférence de 5 à 60 µm.

4. Composition selon l'une quelconque des revendications 1 à 3, **caractérisée en ce que** la silice précipitée est hydrophile.

5. Composition selon l'une quelconque des revendications 1 à 3, **caractérisée en ce que** la silice précipitée est hydrophobe.

6. Composition selon l'une quelconque des revendications 1 à 5, **caractérisée en ce que** la teneur en élastomère de l'additif choc est comprise entre 70 et 90% en poids.

7. Procédé de préparation d'une composition telle que définie aux revendications 1 à 6 par mélange à sec de ses constituants.

8. Composition de polymère(s) thermoplastique(s) **caractérisée en ce qu'**elle comprend de 1 à 15 de préférence de 4 à 9 parties en poids de composition renforçante telle que définie aux revendications 1 à 6 pour 100 parties en poids d'un ou plusieurs polymères thermoplastiques.

9. Composition de polymère(s) thermoplastique(s) selon la revendication 8 dans laquelle au moins un des polymères thermoplastiques est un homo- ou un copolymère de chlorure de vinyle.

## Patentansprüche

1. Verstärkende Zusammensetzung für thermoplastische Polymere, die enthält:
• -mindestens 80 Gew.-% mindestens eines polymeren Schlagzähmodifikators, dessen Elastomergehalt 60 Gew.-% beträgt oder darüber liegt, **dadurch gekennzeichnet, daß** sie enthält:
• höchstens 20 Gew.-% Fällungskieselsäure, die aus Primärteilchen mit einer Größe in der Größenordnung von 10 bis 60 nm besteht, die sich zu Agglomeraten mit mittleren Größen von 3 bis 100 µm verwachsen,
- deren bezogen auf die bei 1000 °C 2 h calcinierte Substanz bestimmter SiO₂-Gehalt über 98 % liegt,
- und die eine spezifische BET-Oberfläche im Bereich von 25 bis 700 m²/g und vorzugsweise 50 bis 500 m²/g aufweist.

2. Zusammensetzung nach Anspruch 1, **dadurch gekennzeichnet, daß** sie 95 bis 99 Gew.-% mindestens eines Schlagzähmodifikators und 5 bis 1 % Fällungskieselsäure enthält.

3. Zusammensetzung nach Anspruch 1 oder 2, **dadurch gekennzeichnet, daß** die Agglomerate der Fällungskieselsäure mittlere Größen im Bereich von 3 bis 80 µm und vorzugsweise 5 bis 60 µm besitzen.

4. Zusammensetzung nach einem der Ansprüche 1 bis 3, **dadurch gekennzeichnet, daß** die Fällungskieselsäure hydrophil ist.

5. Zusammensetzung nach einem der Ansprüche 1 bis 3, **dadurch gekennzeichnet, daß** die Fällungskieselsäure hydrophob ist.

6. Zusammensetzung nach einem der Ansprüche 1 bis 5, **dadurch gekennzeichnet, daß** der Elastomergehalt des Schlagzähmodifikators im Bereich von 70 bis 90 Gew.-% liegt.

7. Verfahren zur Herstellung einer Zusammensetzung nach einem der Ansprüche 1 bis 6 durch Mischen der Bestandteile im trokkenen Zustand.

8. Zusammensetzung mit einem oder mehreren thermoplastischen Polymeren, **dadurch gekennzeichnet, daß** sie 1 bis 15 Gewichtsteile und vorzugsweise 4 bis 9 Gewichtsteile verstärkende Zusammensetzung nach Anspruch 1 bis 6 auf 100 Gewichtsteile eines oder mehrerer thermoplastischer Polymere enthält.

9. Zusammensetzung mit einem oder mehreren thermoplastischen Polymmeren nach Anspruch 8, wobei mindestens ein thermoplastisches Polymer ein Homopolymer oder Copolymer des Vinylchlorid ist.

## Claims

1. Reinforcing composition for thermoplastic polymers, comprising:
• at least 80% by weight of at least one polymeric impact modifier, the elastomer content of which is greater than or equal to 60% by weight, **characterized in that** it comprises:
• at most 20% by weight of precipitated silica - consisting of primary particles from about 10 to 60 nm which combine to form agglomerates of average sizes ranging from 3 to 100 µm,
- the SiO₂ content of which, determined with respect to the substance calcined for 2 hours at 1000°C, is greater than 98%,
- having a BET specific surface area ranging from 25 to 700 m²/g, preferably ranging from 50 to 500 m²/g.

2. Composition according to Claim 1, **characterized in that** it comprises from 95 to 99% by weight of at least one impact modifier and from 5 to 1% of precipitated silica.

3. Composition according to Claim 1 or 2, **characterized in that** the precipitated silica agglomerates have average sizes ranging from 3 to 80 µm, and preferably from 5 to 60 µm.

4. Composition according to any one of Claims 1 to 3, **characterized in that** the precipitated silica is hydrophilic.

5. Composition according to any one of Claims 1 to 3, **characterized in that** the precipitated silica is hydrophobic.

6. Composition according to any one of Claims 1 to 5, **characterized in that** the elastomer content of the impact modifier is between 70 and 90% by weight.

7. Method of preparing a composition as defined in Claims 1 to 6 by dry blending its constituents.

8. Composition based on one or more thermoplastic polymers, **characterized in that** it includes from 1 to 15, preferably from 4 to 9, parts by weight of reinforcing composition as defined in Claims 1 to 6 per 100 parts by weight of one or more thermoplastic polymers.

9. Composition based on one or more thermoplastic polymers according to Claim 8, in which at least one of the thermoplastic polymers is a vinyl chloride homopolymer or copolymer.
